**Europäisches Patentamt**

**European Patent Office**

**Office européen des brevets**

(19)

(11) **EP 1 215 840 A2**

(12) **EUROPÄISCHE PATENTANMELDUNG**

(43) Veröffentlichungstag:
**19.06.2002 Patentblatt 2002/25**

(51) Int Cl.⁷: **H04L 9/00**, H04B 5/00

(21) Anmeldenummer: **01128795.0**

(22) Anmeldetag: **04.12.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **16.12.2000 DE 10062924**

(71) Anmelder: **ATMEL Germany GmbH
74072 Heilbronn (DE)**

(72) Erfinder: **Ansel, Dieter
74081 Heilbronn (DE)**

(74) Vertreter: **Kolb, Georg
DaimlerChrysler AG,
Postfach 35 35
74025 Heilbronn (DE)**

(54) **Kontaktloses Datenübertragungssystem**

(57) 1. Kontaktloses Datenübertragungssystem

2.1. Kontaktlose Datenübertragungssysteme bei denen durch induktive Kopplung zunächst eine Energieübertragung stattfindet, weisen unveränderliche Sicherheitsmerkmale auf, welche die Schnelligkeit und die Reichweite solcher Systeme festlegen.

2.2. An dem Datenübertragungssystem befindet sich ein Schalter oder eine Steuerleitung mit deren Hilfe das Eingangsdatenformat nachträglich verändert werden kann.

2.3. Ein solches kontaktloses Datenübertragungssystem ermöglicht eine nachträgliche Anpassung auf den Verwendungszweck für verschiedenste Anwendungen mit unterschiedlichen Anforderungen an Sicherheit, Schnelligkeit und Reichweite.

FIG. 4

EP 1 215 840 A2

**Beschreibung**

Die Erfindung betrifft ein kontaktloses Datenübertragungssystem nach dem Oberbegriff des Patentanspruchs 1.

Zur Übermittlung verschlüsselter elektronischer Daten sind Datenübertragungssysteme aus einer batteriebetriebenen (IR-/HF-) Fernbedienung als Sendemodul und einem geeigneten Empfängermodul gebräuchlich. Daneben werden auch Datenübertragungssysteme aus Transponder und Lesegeräte eingesetzt, bei denen durch induktive Kopplung zunächst eine Energieübertragung zwischen Lesegerät und Transponder und anschließend eine Datenübertragung zwischen Transponder (Sender) und Lesegerät (Empfänger) vorgenommen wird. Derartige Datenübertragungssysteme sind, insbesondere im Kfz-Bereich, als Kombination aus elektronischem Schlüssel (Transponder) und elektronischem Schloss (Lesegerät) zur Bedienung von Schließanlagen und Diebstahlsicherungen in Form von Wegfahrsperren auf den Markt.

Die Datenübertragung im RF-Bereich (typ. 100 kHz bis 450 kHz) zwischen dem im wesentlichen aus einem Integrierten Schaltkreis (IC) und einer Spule bestehenden Transponder und dem Lesegerät kann auf mehrere Weisen erfolgen:

Entweder unidirektional mittels eines Festcode-Transponders, der bei jedem Auslesevorgang (bei jeder Datenübertragung) einen in einem Festwertspeicher (PROM) des ICs programmierten gleichbleibenden Code als Passwort überträgt oder bidirektional mittels eines "Read/Write"-Transponders, der bei jedem Auslesevorgang (bei jeder Datenübertragung) einen in einem Schreib-/Lesespeicher (EEPROM) des ICs abgespeicherten variablen Code als Passwort überträgt und nach erfolgreicher Authentifizierung vom Lesegerät einen neuen Code erhält und in das EEPROM einträgt. Als zusätzliche Maßnahme zur Erhöhung der Sicherheit werden neben den Chiffrierungsmaßnahmen auch Algorithmen zur Verifizierung der Zusammengehörigkeit von Transponder und Basisstation verwendet. Hierbei ergibt sich folgender Ablauf:

- die Basisstation generiert ein elektromagnetisches Feld;
- dadurch wird der Transponder aktiviert;
- der Transponder sendet seine Identifikationsnummer zur Basisstation;
- die Basisstation prüft die Richtigkeit der Identifikationsnummer und generiert eine Basisstations-Zufallszahl;
- die Basisstations-Zufallszahl wird in der Basisstation chiffriert;
- die chiffrierte Basisstations-Zufallszahl wird zum Transponder gesendet; und dort dechiffriert, wodurch eine Transponder- Zufallszahl entsteht.
- diese Transponder-Zufallszahl oder ein von der Transponder-Zufallszahl abhängiger Wert wird zur Basisstation gesendet und dort auf ihre Richtigkeit überprüft.
- diese Transponder- bzw. Basisstations-Zufallszahl ist der Eingangswert für einen Variable aufweisenden Algorithmus, der sowohl in der Basisstation als auch im Transponder vorhanden ist, wobei durch einen Geheimschlüssel den Variablen des Algorithmus eindeutige Werte zugewiesen werden, und der im Transponder ein Transponder-Ergebnis und in der Basisstation eine Basisstations-Ergebnis generiert.
- Das Transponder-Ergebnis wird an die Basisstation gesendet
- Transponder- Ergebnis und Basisstations-Ergebnis werden in der Basisstation miteinander verglichen.

Bei einem solchen Ablauf können identische Ergebnisse von Transponder und Basisstation nur dann erzielt werden, wenn der Geheimschlüssel, der Algorithmus, die Zufallszahl und die Chiffrierung in den beiden Bauteilen identisch oder zumindest dem anderen Bauteil bekannt sind.

Die Sicherheit und auch die Schnelligkeit eines solchen Datenübertragungssystems ist unter anderem von dem Format der Zufallszahl, insbesondere von der Anzahl der Bits aus der sich die Zufallszahl zusammensetzt, abhängig.

**Nachteilig** hierbei ist jedoch, dass die Sicherheit, gegebenenfalls die Reichweite und die Schnelligkeit eines kontaktlosen Datenübertragungssystems, die einen Algorithmus zur Verschlüsselung beinhalten, nicht verändert werden können.

**Aufgabe der Erfindung** ist es, ein kontaktloses Datenübertragungssystem aufzuzeigen, bei dem, insbesondere in Abhängigkeit von der Anwendung, die Schnelligkeit, gegebenenfalls die Reichweite und Sicherheit nachträglich verändert werden kann.

Die Aufgabe der Erfindung wird durch die Merkmale im Kennzeichen des Patentanspruchs 1 **gelöst**. Hierbei weist das Datenübertragungssystem zumindest eine Vorrichtung auf, mit der unterschiedliche Eingangsdaten-Formate für den Verschlüsselungsalgorithmus eingestellt werden. Die Vorrichtung kann hardwaremäßig aus einem oder mehreren zusätzlichen Anschlüssen, bzw. Anschlussbelegungen und Schaltern oder auch softwaremäßig aus einem oder mehreren zusätzlichen Steuersignalen bestehen, welche das Eingangsdatenformat bestimmt.

Die **Vorteile** der Erfindung sind, dass nicht mehr unterschiedliche Datenübertragungssysteme für unterschiedliche Anwendungen benötigt werden, sondern dass identische Datenübertragungssysteme, für unterschiedliche Anwendungen mit unterschiedlichen Anforderungen verwendet werden können. Auch können die Eigenschaften bei solchen Datenübertragungssystemen, bei ein und derselben Anwendung, individuell eingestellt werden.

**Vorteilhafte Weiterbildungen** ergeben sich aus den Unteransprüchen. Hierbei wird ein und derselbe Verschlüsselungsalgorithmus für die verschiedenen Eingangsdatenformate verwendet. Eine weitere vorteilhafte

Weiterbildung ergibt sich aus der Beibehaltung des Geheimschlüssels unabhängig vom Eingangsdatenformat.

Die Erfindung soll nachfolgend anhand von zwei Ausführungsbeispielen und Figuren näher erläutert werden. Es zeigen

Figur 1: Verschlüsselungsblock
Figur 2a: Funktionsblock des 32 Bit Verschlüsselungsalgorithmus
Figur 2b: Funktionsblock des 64 Bit Verschlüsselungsalgorithmus
Figur 3: Wirkung der Funktion f im Verschlüsselungsalgorithmus
Figur 4: Datenübertragungssystem

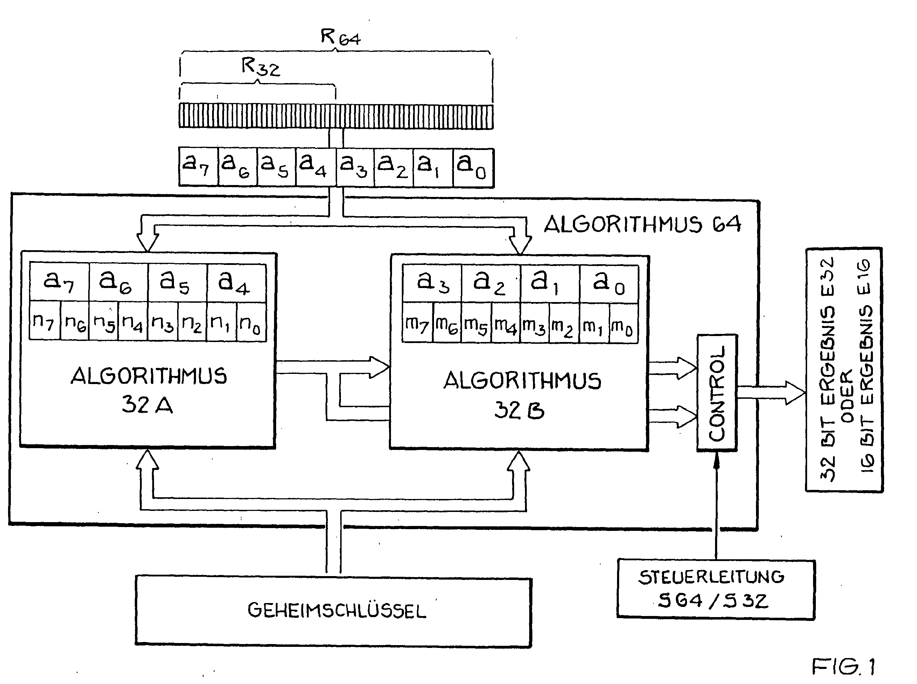

**Figur 1** zeigt den Verschlüsselungsblock. Bei einem Eingangsdatenformat von 64 Bit wird zuerst die Zufallszahl $R_{64}$, welche dieses Format aufweist in eine erste Variante $R_8$ umgewandelt, welche aus 8 Bytes besteht: $a_7, a_6, a_5, a_4, a_3, a_2, a_1, a_0$, wobei jedes Byte wiederum 8 Bits aufweist. Diese 8 Bytes sind die Eingangsdaten für den Verschlüsselungsalgorithmus A64, mit dem ein 64 Bit Zufallszahl bearbeitet werden kann. Im Anwendungsbeispiel setzt sich der Verschlüsselungsalgorithmus **A64** aus zwei Komponenten zusammen, dem **A32A** und dem **A32B**, wobei jede dieser Komponenten 32 Bit verarbeitet. Von den beiden Bestandteilen des **A64** bildet zumindest eine Komponente einen eigenständigen Verschlüsselungsalgorithmus, mit dem eine Berechnung ohne Berücksichtigung des anderen Teils durchgeführt werden kann. Der **A64** Algorithmus dient zur Verarbeitung von einer Zufallszahl mit einem 64 Bit Format und der **A32A** bzw. der **A32B** von jeweils einem 32 Bit Format. Bei der Verarbeitung der 8 Bytes werden die ersten 4 Bytes $a_7, a_6, a_5, a_4$ dem **A32A** zugeführt und die anderen 4 Bytes $a_3, a_2, a_1, a_0$ dem **A32B** zugeführt. Danach werden sowohl im **A32A** und im **A32B** den jeweiligen 4 Bytes: $a_7, a_6, a_5, a_4$ und $a_3, a_2, a_1, a_0$ jeweils 8 Nibbles $n_7, n_6, n_5, n_4, n_3, n_2, n_1, n_0$ und $m_7, m_6, m_5, m_4, m_3, m_2, m_1, m_0$ zugeordnet, die wiederum jeweils 4 Bits aufweisen. Der Algorithmus bzw. dessen Bestandteile weisen Variable auf. Diesen Variablen werden mittels eines 120 Bit Geheimschlüssels eindeutige Werte zugeordnet. Dieser Geheimschlüssel beinhaltet die Schlüsseldaten, diese werden sowohl für den **A64** als auch für den **A32A** und **A32B** verwendet. Sie werden dem Verschlüsselungsalgorithmus **A64** von außen zugeführt.

Der Verschlüsselungsalgorithmus und der Geheimschlüssel sind so zu wählen, dass sie für Zufallszahlen bzw. Zufallszahlvarianten mit unterschiedlichen Formaten verwendet werden können. Im Anwendungsbeispiel also für eine Zufallszahl bzw. einer Zufallszahlvariante mit einem Format von:

64 Bit bzw. 16 Nibble bzw. 8 Byte oder
32 Bit bzw. 8 Nibble bzw. 4 Byte.

Des weiteren weist der Verschlüsselungsblock eine Steuerleitung auf mit der das Format der Zufallszahl bzw. der Zufallszahlvariante über eine Kontrolleinheit **CONTROL** ausgewählt werden kann. Wird über die Steuerleitung **S64/32** ein 64 Bit Format gewählt, so wird der Verschlüsselungsalgorithmus **A64** mit seinen beiden Bestandteilen **A32A** und **A32B** aktiviert. Das Ergebnis $E_{32}$ am Ausgang weist dann beispielsweise ein 32 Bit Format auf. Wird jedoch über die Steuerleitung **S64/32** ein 32 Bit Format für die Zufallszahl bzw. für die Zufallszahlvariante gewählt, so ist nur der Verschlüsselungsalgorithmus **A32A** aktiv. Das Ergebnis $E_{16}$ am Ausgang weist dann ein 16 Bit Format auf. Die Berechnungszeiten sind für das kleinere Format kürzer und es wird hierfür weniger Energie benötigt.

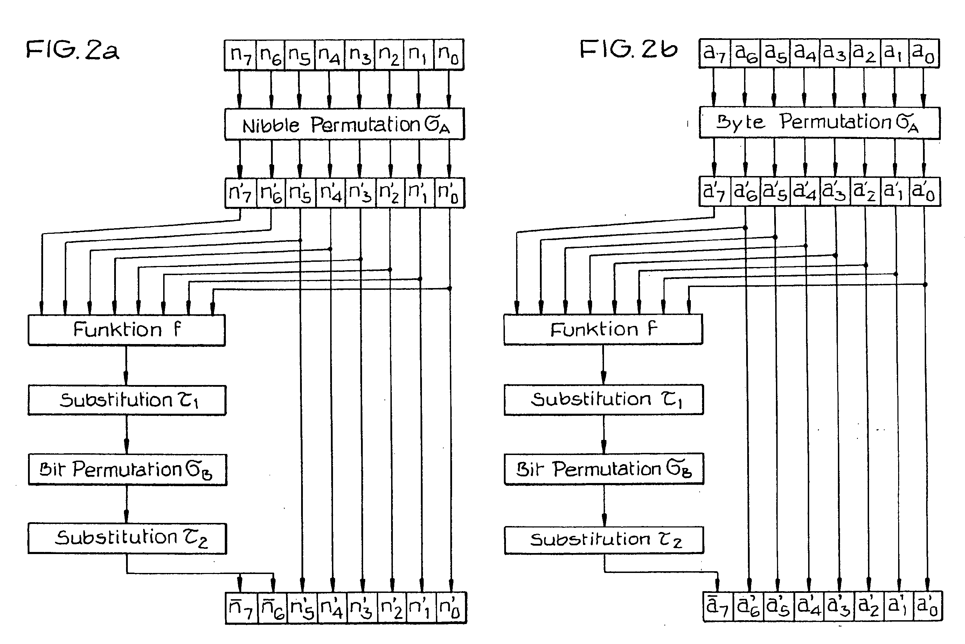

**Figur 2a** zeigt den Funktionsblock des 32 Bit Verschlüsselungsalgorithmus **A32A**. Hierbei handelt es sich um eine nibbleorientierte Verschlüsselung, die aus 32 Bits einer mindestens 32 bitformatigen Zufallszahl $R_{32}$ generiert wird und die beispielsweise einen 120 Bit formatigen Geheimschlüssel verwendet. Durch diesen Geheimschlüssel werden die Nibble Permutation $\sigma_A$, die Funktion **f**, die erste Substitution $\tau_1$, die Bit Permutation $\sigma_B$ und die zweite Substitution eindeutig definiert. Hierbei können sowohl die beiden Permutationen $\sigma_A$, $\sigma_B$ als auch die beiden Substitutionen identisch sein, so dass $\sigma_A = \sigma_B$ und /oder $\tau_1 = \tau_2$.

Am Anfang werden acht Nibbles $n_7, n_6, n_5, n_4, n_3, n_2, n_1, n_0$, die aus jeweils 4 Bit bestehen und die Bestandteile der Zufallszahl sind, permutiert mit $\sigma_A$ und neue acht Nibbles erzeugt $n'_7, n'_6, n'_5, n'_4, n'_3, n'_2, n'_1, n'_0$. Darauf folgend werden diese acht Nibbles $n'_7, n'_6, n'_5, n'_4, n'_3, n'_2, n'_1, n'_0$ einer Funktion **f** zugeführt. Dann wird das Funktionsergebnis einer ersten Substitution $\tau_1$ unterzogen, worauf eine weitere Bit-Permutation $\sigma_B$ durchgeführt wird. Zum Schluss erfolgt eine zweite Substitution $\tau_2$. Dieses Ergebnis dient dazu, die Nibbles $n'_7$ und $n'_6$ auszutauschen, so dass ein neuer Wert mit $\bar{n}_7, \bar{n}_6, n'_5, n'_4, n'_3, n'_2, n'_1, n'_0$ entsteht. Dieser Verschlüsselungsprozess mit den beschriebenen Operationen läuft in einer Schleife mit z.B. 24 Runden.

**Figur 2b** zeigt den Funktionsblock des 64 Bit Verschlüsselungsalgorithmus **A64**. Hierbei handelt es sich um eine byteorientierte Verschlüsselung, die aus einer 64 Bit Zufallszahl $R_{64}$ generiert wird und beispielsweise einen 120 Bit formatigen Geheimschlüssel verwendet. Durch diesen Geheimschlüssel werden die Byte Permutation $\sigma_A$, die Funktion **f**, die erste Substitution $\tau_1$, die Bit Permutation $\sigma_B$ und die zweite Substitution $\tau_2$ definiert. Hierbei können sowohl die beiden Permutationen $\sigma_A$, $\sigma_B$ als auch die beiden Substitutionen identisch sein, so dass $\sigma_A = \sigma_B$ und /oder $\tau_1 = \tau_2$.

Am Anfang werden acht Bytes $a_7, a_6, a_5, a_4, a_3, a_2, a_1, a_0$,

die aus jeweils 8 Bit bestehen und die sich aus der Zufallszahl ergeben, permutiert mit $\sigma_A$ und neue acht Bytes erzeugt $a'_7, a'_6, a'_5, a'_4, a'_3, a'_2, a'_1 a'_0$. Darauf folgend werden diese acht Bytes $a'_7, a'_6, a'_5, a'_4, a'_3, a'_2, a'_1, a'_0$ einer Funktion **f** zugeführt. Dann wird das Funktionsergebnis einer ersten Substitution $\tau_1$ unterzogen, worauf eine weitere Bit-Permutation $\sigma_B$ durchgeführt wird. Zum Schluss erfolgt eine zweite Substitution $\tau_2$. Dieses Ergebnis dient dazu, das Byte $a'_7$ auszutauschen, so dass ein neuer Wert mit $\bar{a}_7, a'_6, a'_5, a'_4, a'_3, a'_2, a'_1, a'_0$ entsteht. Dieser Verschlüsselungsprozess mit den beschriebenen Operationen läuft in einer Schleife mit z.B. 24 Runden.

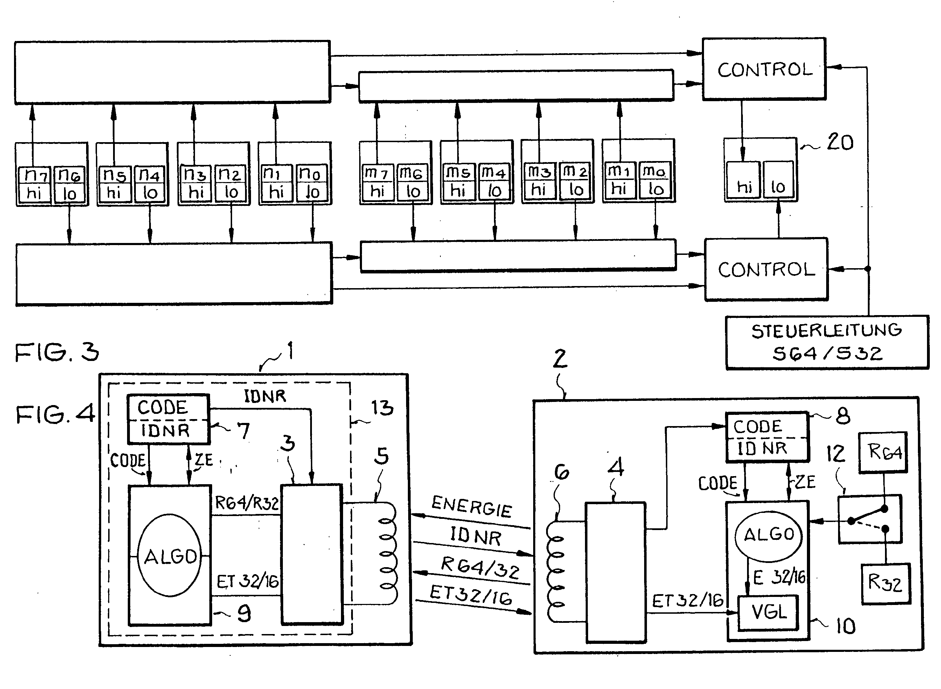

**Figur 3** zeigt die Wirkungsweise der Funktion **f** für den 32 und 64 Bit Verschlüsselungsalgorithmus. Die Funktion **f** ist derart aufgebaut, dass sie mit unterschiedlichen Eingangsdatenbreiten arbeiten kann. Die Eingangsdatenbreite kann von 64 Bits oder 8 Bytes ($a_7, a_6, a_5, a_4, a_3, a_2, a_1, a_0$) oder 16 Nibbles ($n_7, n_6, n_5, n_4, n_3, n_2, n_1, n_0, m_7, m_6, m_5, m_4, m_3, m_2, m_1, m_0$) auf 32 Bits oder 4 Bytes ($a_7, a_6, a_5, a_4$) oder 8 Nibbles ($n_7, n_6, n_5, n_4, n_3, n_2, n_1, n_0$) reduziert werden. Im Anwendungsbeispiel werden dann jedem Nibble beispielsweise vier Bits **hi, lo** zugeordnet. Dann werden alle Vierer-Bits **hi**, die aus den ungeradzahligen Nibbles $n_7, n_5, n_3, n_1$ [$m_7, m_5, m_3, m_1$] entstanden sind, einer Verknüpfung unterworfen, die ein 4-Bit Ergebnis **hi** erzeugt, unabhängig von der Anzahl Nibbles. Das gleiche erfolgt auch mit den Vierer-Bits **lo**, die aus den geradzahligen Nibbles $n_6, n_4, n_2, n_0$ [$m_6, m_4, m_2, m_0$] entstanden sind. Das Endergebnis **20** der Funktion **f** weist dann immer zwei Nibbles bzw. zwei Vierer-Bits **hi, lo** auf, egal ob die n- und m-Nibbles oder die n-Nibbles allein das 2-Nibble Ergebnis **20** erzeugten. Diese Figur soll veranschaulichen, dass bei der Wahl des 64-Bit Verschlüsselungsalgorithmus beide Blöcke aktiviert werden können und bei der Wahl des 32-Bit Algorithmus nur der erste Block verwendet wird, wobei immer der gleiche Geheimschlüssel mit den gleichen Schlüsseldaten für die Funktion **f** des Algorithmus verwendet werden kann. Ferner weist das Ergebnis, das diese Funktion **f** aus den Figuren 2a und 2b liefert, immer dasselbe Format auf unabhängig vom Eingangsdatenformat. In dieser Abbildung werden die Kontrolleinrichtungen **CONTROL,** deren Eingänge mit der geradzahligen und ungeradzahligen Nibble-Verknüpfung verbunden sind und deren Ausgangssignale das Ergebnis **20** erzeugen von der Steuerleitung **S64/32** beeinflusst. Unter Steuerleitung soll in diesem Anwendungsbeispiel eine Leitung oder Verbindung verstanden werden, in der z. B. programmierbare Steuersignale weitergeleitet werden, die den Berechnungsablauf oder die Geräteeinstellungen softwaremäßig beeinflussen.

**Figur 4** zeigt das Datenübertragungssystem für variable Datenformate. Das Datenübertragungssystem weist einen Transponder **1** und ein Lesegerät **2** auf. Der Transponder **1** beinhaltet eine Transponder-Spule **5,** zur Energie- und Datenübertragung, sowie einen integrierten Schaltkreis (IC) **13.** Der IC **13** beinhaltet eine Transponder-Steuereinheit **3** zur Spannungsversorgung und Ablaufsteuerung, eine Speichereinheit **7** - in dieser ist die Identifikationsnummer **IDNR** und der Geheimschlüssel **CODE** gespeichert; gleichfalls können hier Zwischenergebnisse **ZE** abgelegt werden und eine Verschlüsselungs-/Entschlüsselungs-/Berechnungseinheit **9** zur Generierung des Transponder Ergebnisses $E_{T64/32}$ mit Hilfe der Lesegeräts-Zufallszahl $R_{64}$, $R_{32}$, die als Eingangswert für den Algorithmus **A64** benötigt wird.

Das Lesegerät **2** besteht aus einer Spule **6,** die gleichzeitig zur Energieübertragung und zur Datenübertragung dient, aus der Steuereinheit **4** zur Ablaufsteuerung, aus der Speichereinheit **8** zur Speicherung der Identifikationsnummer **IDNR** und des Geheimschlüssels **CODE** und aus der Verschlüsselungs-/Entschlüsselungs-/Berechnungseinheit **10** zur Generierung des Lesegerät-Ergebnisses $E_{L64/32}$ mit Hilfe der Lesegeräts-Zufallszahl $R_{64}$, $R_{32}$, die als Eingangswert für den Algorithmus **A64** benötigt wird. Ferner beinhaltet die Anordnung einen elektrischen, elektronischen, optischen oder mechanischen Schalter **12** oder aber eine Steuerleitung wie in vorhergehenden Figuren dargestellt mit der das Format der Zufallszahl $R_{64}$ oder $R_{32}$ ausgewählt wird.

Nach der Aktivierung des Lesegeräts **2** - beispielsweise für ein Kraftfahrzeug durch Betätigung des Türgriffs oder durch Einschalten der Zündung - wird Energie von der Spule **6** des Lesegeräts **2** an die Spule **5** des Transponders **1** übertragen. Dieser Vorgang ist in der Zeichnung durch den mit **ENERGIE** gekennzeichneten Pfeil zwischen Lesegerät **2** und Transponder **1** dargestellt. Dann wird die Identifikationsnummer **IDNR,** die in der Speichereinheit **7** des Transponders **1** abgelegt ist, über die Steuereinheit **3** an das Lesegerät **2** gesendet. Die Übertragung der Identifikationsnummer ist als Pfeil mit der Bezeichnung **IDNR** zwischen Transponder **1** und Lesegerät **2** dargestellt ist. Die Identifikationsnummer **IDNR** wird im Lesegerät **2** verifiziert. Dann wird im Lesegerät **2** eine Lesegerät-Zufallszahl $R_{64}/R_{32}$ erzeugt. Das Format der Zufallszahl $R_{64}/R_{32}$ ist abhängig von der Stellung des Schalters **12.** Entweder hat die Zufallszahl ein 64 Bit Format $R_{64}$ oder ein 32 Bit Format $R_{32}$. Diese Zufallszahl $R_{64}/R_{32}$ wird verschlüsselt zum Transponder **1** gesendet. In der Einrichtung **9** wird die Zufallszahl $R_{64}/R_{32}$ entschlüsselt. Die Lesegerät-Zufallszahl $R_{64}/R_{32}$ und die Transponder-Zufallszahl $R_{64}/R_{32}$ sollen im Anwendungsbeispiel identisch sein. Sie bilden die Eingangsdaten für die Berechnung mit dem Lesegerät-Algorithmus **A64** und entsprechend mit dem Transponder Algorithmus **A64.** Der Transponder- und der Lesegerät-Algorithmus sind im Anwendungsbeispiel identisch und erzeugen bei identischem Geheimschlüssel **CODE** und identischer Zufallszahl $R_{64}/R_{32}$ als Eingangsgröße ein identisches Endergebnis $E_{T32/16}$, $E_{L32/16}$, mit 32 Bit bzw. 16 Bit Format. Zur Erhöhung der Sicherheit werden bei der Berechnung Zwischenergebnisse **ZE** erzeugt. Das Zwischenergebnis dient dann als neuer Eingangswert für den Algorithmus, der dann mehrere Runden lang die Berechnungen mit den sich ständig ändernden Zwischenergebnissen wiederholt, bis dann das Endergebnis nach beispielsweise 24 Runden feststeht. Das Transponder-Ergebnis $\mathbf{E_{T32/16}}$ wird danach zum Lesegerät **2** gesendet und dort in einer Vergleichsvorrichtung **VGL** mit dem im Lesegerät **2** berechneten Lesegerät-Ergebnis verglichen.

Die Selektion der Eingangsdatenbreite also die Auswahl ob eine 64 Bit Zufallszahl $\mathbf{R_{64}}$ oder eine 32 Bit Zufallszahl $\mathbf{R_{32}}$ ausgewählt wird kann nicht nur über einen Schalter **12,** wie in dieser Figur abgebildet, sondern auch über eine programmierbare Steuerleitung **S64/32** erfolgen, wie sie in Figur 1 und 3 abgebildet ist.

Durch das Umschalten des Eingangsdatenformats für den Algorithmus können die zu übertragenden Datenmengen und damit auch der Energiebedarf reduziert und die Schnelligkeit und Reichweite erhöht werden. Damit lassen sich mit einem solchen Datenübertragungssystem Sicherheitsstufen programmieren oder über einen Schalter einstellen, die eine nachträgliche Anpassung der Spezifikationen des Datenübertragungssystems auf die jeweilige Anforderungen erlauben.

Derartige Datenübertragungssysteme mit veränderbarem Eingangsdatenformat für einen Verschlüsselungsalgorithmus können nicht nur für Transpondersysteme genutzt werden, sondern können für alle drahtlosen Übertragungssysteme, insbesondere elektromagnetische optische und hochfrequente Systeme, verwendet werden.

## Patentansprüche

1. Kontaktloses Datenübertragungssystem mit

   - einem Verschlüsselungsalgorithmus (A64), bei dem
   - die Eingangsdaten ($R_{64}$, $R_{32}$), die mit dem Verschlüsselungsalgorithmus (A64) verarbeitet werden mit
   - einem Geheimschlüssel (CODE), die den Verschlüsselungsalgorithmus (A64) bestimmen, verknüpft werden,

   **dadurch gekennzeichnet, dass** das Datenübertragungssystem eine Vorrichtung (12, S64/S32) zur Einstellung auf unterschiedliche Formate der Eingangsdaten ($R_{64}$, $R_{32}$) für den Verschlüsselungsalgorithmus (A64) aufweist.

2. Kontaktloses Datenübertragungssystem nach Patentanspruch 1, **dadurch gekennzeichnet, dass** die Vorrichtung zur Einstellung auf unterschiedliche Formate der Eingangsdaten ($R_{64}$, $R_{32}$) eine Steuerleitung (S64/S32) ist.

3. Kontaktloses Datenübertragungssystem nach Patentanspruch 1, **dadurch gekennzeichnet, dass** die Vorrichtung zur Einstellung auf unterschiedliche Formate der Eingangsdaten ($R_{64}$, $R_{32}$) ein Schalter (12) ist.

4. Verfahren für ein kontaktloses Datenübertragungssystem nach einem der vorangegangenen Ansprüche, **dadurch gekennzeichnet, dass** der gleiche Verschlüsselungsalgorithmus (A64) für die unterschiedlichen Formate der Eingangsdaten ($R_{64}$, $R_{32}$) verwendet wird.

5. Verfahren für ein kontaktloses Datenübertragungssystem nach einem der vorangegangenen Ansprüche, **dadurch gekennzeichnet, dass** der gleiche Geheimschlüssel (CODE) für die unterschiedlichen Formate der Eingangsdaten ($R_{64}$, $R_{32}$) verwendet wird.

FIG.1

EP 1 215 840 A2

FIG. 2a

$n_7$ $n_6$ $n_5$ $n_4$ $n_3$ $n_2$ $n_1$ $n_0$

Nibble Permutation $\sigma_A$

$n'_7$ $n'_6$ $n'_5$ $n'_4$ $n'_3$ $n'_2$ $n'_1$ $n'_0$

Funktion f

Substitution $\tau_1$

Bit Permutation $\sigma_B$

Substitution $\tau_2$

$\bar{n}_7$ $\bar{n}_6$ $n'_5$ $n'_4$ $n'_3$ $n'_2$ $n'_1$ $n'_0$

FIG. 2b

$a_7$ $a_6$ $a_5$ $a_4$ $a_3$ $a_2$ $a_1$ $a_0$

Byte Permutation $\sigma_A$

$a'_7$ $a'_6$ $a'_5$ $a'_4$ $a'_3$ $a'_2$ $a'_1$ $a'_0$

Funktion f

Substitution $\tau_1$

Bit Permutation $\sigma_B$

Substitution $\tau_2$

$\bar{a}_7$ $\bar{a}'_6$ $a'_5$ $a'_4$ $a'_3$ $a'_2$ $a'_1$ $a'_0$

EP 1 215 840 A2

CONTROL

CONTROL

| $n_7$ hi | $n_6$ lo | $n_5$ hi | $n_4$ lo | $n_3$ hi | $n_2$ lo | $n_1$ hi | $n_0$ lo | $m_7$ hi | $m_6$ lo | $m_5$ hi | $m_4$ lo | $m_3$ hi | $m_2$ lo | $m_1$ hi | $m_0$ lo |

~ 20

hi | lo

STEUERLEITUNG
S64 / S32

FIG. 3

FIG. 4

1

CODE
IDNR          IDNR          13

7             3             5

CODE   ZE

ALGO

R64/R32

ET 32/16

9

2

CODE
IDNR          8          R64

12

6      4

CODE   ZE

ALGO

ENERGIE

IDNR

R64/32

ET 32/16

E 32/16

ET 32/16      VGL      10

R32

EP 1 215 840 A2